# EUROPÄISCHE PATENTANMELDUNG

(11) **EP 2 732 968 A1**
(43) Veröffentlichungstag der Anmeldung: **21.05.2014**
(21) Anmeldenummer: 12193078.8
(22) Anmeldetag: 16.11.2012
(51) Int. Cl.: B32B 17/10

(54) **Penetrationsfeste Mehrschichtfolien aus weichmacherhaltigem Polyvinylacetal mit schalldämpfenden Eigenschaften**

(71) Anmelder: Kuraray Europe GmbH, 65795 Hattersheim (DE)
(72) Erfinder: Die Erfindernennung liegt noch nicht vor
(74) Vertreter: Kisters, Michael Marcus

(57) **Zusammenfassung**

Die Erfindung betrifft eine Zwischenschichtfolie für Verbundverglasungen, aufgebaut aus mindestens einer ersten und mindestens einer zweiten Teilfolie enthaltend weichmacherhaltigen Polyvinylacetal mit jeweils unterschiedlichem Weichmachergehalt, wobei die Zwischenschichtfolie einen Gesamtweichmachergehalt von weniger als 28 Gew.% besitzt und ein aus der Zwischenschichtfolie und zwei Glassplatten der Dicke 2 mm gefertigtes Laminat
a) nach ISO16940 eine Eigenfrequenz der 2. Mode bei 20°C von größer 750 Hz und
b) nach ISO16940 einen Verlustfaktor bei einer Temperatur von 20°C von mindestens 0,25

aufweist.

Die Folie kann insbesondere für Windschutzscheiben unter Verwendung von Gläsern mit einer Gesamtdicke von weniger als 3,7 mm verwendet werden.

## Beschreibung

### Technisches Gebiet

Die Erfindung betrifft eine als schalldämmende Zwischenschicht in Verbundsicherheitsgläsern geeignete weichmacherhaltige Folie, die aus mindestens zwei Teilfolien auf der Basis von weichmacherhaltigen Polyvinylacetalen mit unterschiedlichem Polyvinylalkoholgehalt aufgebaut ist und gute Penetrationseigenschaften aufweist.

### Stand der Technik

Verbundsicherheitsgläser bestehen im Allgemeinen aus zwei Glasscheiben und einer die Glasscheiben verbindenden Zwischenfolie. Als Folienmaterial wird überwiegend weichmacherhaltiger teilacetalisierter Polyvinylalkohol (Polyvinylacetal), insbesondere Polyvinylbutyral (PVB) verwendet. Verbundsicherheitsgläser (VSG) werden beispielsweise als Windschutzscheiben oder Seitenverglasungen im Kraftfahrzeugbereich sowie als Sicherheitsverglasung im Baubereich eingesetzt.

Ein immer wichtiger werdendes Merkmal von Verbundverglasungen sind deren schalldämmende Eigenschaften. Dies kann z.B. durch eine besonders weiche und damit schallabsorbierende Zwischenschichtfolie erreicht werden. Diese Folien sind aber mechanisch oft nicht ausreichend stabil oder weisen keine ausreichenden Haftungseigenschaften an Glas auf.

Alternativ können Mehrschichtsysteme eingesetzt werden, wobei sich die Teilschichten in ihren mechanischen Festigkeiten unterscheiden und so durch mechanische Entkopplung eine Schalldämmung erreicht wird.

Unterschiedliche mechanische Festigkeiten von Folien basierend auf weichmacherhaltigem Polyvinylacetal können z.B. durch deren Weichmachergehalt oder den Anteil an Polyvinylalkohol- oder Polyvinylacetatgruppen im eingesetzten Polyvinylacetal eingestellt werden.

So beschreiben EP 2153989 A1 oder US 5,340,654 Mehrschichtfolien, bei der eine erste Teilschicht ein Polyvinylacetal mit einem hohen Restacetatgehalt und eine zweite Teilschicht ein Polyvinylacetal mit einem niedrigeren Restacetatgehalt enthalten. Durch die unterschiedlichen Restacetatgehalte kann eine der Teilfolien einen hohen und die andere einen niedrigeren Weichmachergehalt aufweisen, wodurch unterschiedliche mechanische Festigkeiten der Teilfolien resultieren.

WO 2006/102049 offenbart ein ähnliches Mehrschichtsystem, bei dem zwei Teilfolien Polyvinylacetal mit einem gleichen Restacetatgehalt aber unterschiedlichen Anteil an Polyvinylalkoholgruppen aufweisen. Auch hier wird ein unterschiedlicher Weichmachergehalt und damit unterschiedliche mechanische Festigkeiten der Teilfolien bewirkt.

Die hier beschriebenen Mehrschichtfolien weisen bedingt durch die weiche Teilfolie zwar schalldämmende Eigenschaften auf, sind aber durch den hohen Gesamtweichmachergehalt von über 29 Gew% mechanisch labiler, was sich z.B. auf die Penetrationsfestigkeit eines hiermit hergestellten Glas/Glaslaminats (zb eine Windschutzscheibe) negativ auswirkt.

Diese Mehrschichtfolien eignen sich für die Verwendung als Schallabsorbierende Folien in herkömmlichen Windschutzscheiben oder Gebäudeverglasungen. Die in der Automobilindustrie herkömmlich verwendeten Windschutzscheiben weisen meist Gesamtdicken (bezogen auf Glas) von mehr als 3.7 mm auf.

Es ist zur Zeit ein Ziel der Automobilindustrie, die Emission der Kraftfahrzeuge an CO₂ zu begrenzen bzw. deren Kraftstoffverbrauch zu senken. Dabei kommt der Reduzierung des Gesamtgewichts von Kraftfahrzeugen eine bedeutende Rolle zu. Zur Verringerung des Gesamtgewichts von Kraftfahrzeugen kann auch die Verringerung des Gewichts der Verglasung beitragen. So werden bei der Verwendung von dünnerem Glas für Windschutzscheiben mehrere Kilogramm Gewicht eingespart.

Ein Nachteil bei dieser Glasdickenreduzierung ist, dass sich dadurch die Schalldämmeigenschaften der Windschutzscheiben verschlechtern. Das liegt zum einen an dem nominellen Verlust von Glasmasse (Massengesetz) und zum Anderen an der Verschiebung von Koinzidenzeinbrüchen zu höheren Frequenzen. Das menschliche Ohr ist besonders in den Regionen 1000-5000 Hz anfällig, was dem Frequenzbereich der menschlichen Sprache entspricht. Die verringerte Schalldämpfung der Windschutzscheiben bewirkt einen enormen Nachteil auf die Komforteigenschaften der Passagiere. Zudem besitzen Laminate aus dünneren Scheiben geringere Penetrationsfestigkeiten, insbesondere bei der Verwendung von schalldämmenden Folien mit an sich geringerer mechanischer Festigkeit.

Aufgabe der vorliegenden Erfindung war es daher, Zwischenschichtfolien für Verbundverglasungen mit schalldämmenden Eigenschaften herzustellen, die gute Dämpfungseigenschaften bei ausreichender Steifigkeit d.h. ausreichender Penetrationsfestigkeit aufweisen und damit zur Herstellung von z.B. Windschutzscheiben mit dünneren Gläsern in einer Dicke unter 3.7 (bezogen auf Gesamtdicke der beiden Einzelscheiben) mm geeignet sind.

Es wurde gefunden, dass Zwischenschichtfolien auf Basis von weichmacherhaltigem Polyvinylacetal, die Teilschichten aus Polyvinylacetal mit unterschiedlichem Polyvinylalkoholgehalt und niedrigen Gesamtweichmachergehalten aufweisen, ausreichende Steifigkeiten bzw. Penetrationsfestigkeiten trotz guter Dämpfungseigenschaften besitzen.

Gegenstand der vorliegenden Erfindung ist daher eine Zwischenschichtfolie für Verbundverglasungen, aufgebaut aus mindestens einer ersten und mindestens einer zweiten Teilfolie enthaltend weichmacherhaltigen Polyvinylacetal mit jeweils unterschiedlichem Weichmachergehalt, wobei die Zwischenschichtfolie einen Gesamtweichmachergehalt von weniger als 28 Gew.% besitzt und ein aus der Zwischenschichtfolie und zwei Glassplatten der Dicke 2 mm gefertigtes Laminat
a) nach ISO16940 eine Eigenfrequenz der 2. Mode bei 20°C von größer 750 Hz und
b) nach ISO16940 einen Verlustfaktor der 2. Mode bei einer Temperatur von 20°C von mindestens 0,25 aufweist.

Bevorzugt weist ein aus einer erfindungsgemäßen Folie und zwei Glassplatten der Dicke 2 mm gefertigtes Laminat bei einer Temperatur von 20°C eine Eigenfrequenz der 2.Mode gemessen nach ISO16940 von größer 780 Hz und insbesondere größer 800 Hz auf.

Bevorzugt weist ein aus einer erfindungsgemäßen Folie und zwei Glassplatten der Dicke 2 mm gefertigtes Laminat gemäß ISO 16940 für die 2. Mode Verlustfaktoren bei 10 °C von über 0.15, besonders bevorzugt von über 0.3 und besonders bevorzugt von über 0.35 auf. Die Verlustfaktoren für die 2. Mode liegen bei 30°C bevorzugt über 0.25.

Bevorzugt weist ein aus einer erfindungsgemäßen Folie und zwei Glassplatten der Dicke 2 mm gefertigtes Laminat nach ISO16940 eine Eigenfrequenz der 1. Mode bei 20°C von größer 160 Hz auf. Der Verlustfaktor der 1. Mode bei 20°C weist dabei bevorzugt Werte von über 0.2 und besonders bevorzugt von über 0.25 auf

Die Bestimmung der Dämpfungseigenschaften (Verlustfaktoren und Eigenfrequenz) erfolgt gemäß ISO16940 an einem Testkörper aus einer 0,76-1,14 mm dicken Zwischenschichtfolie (die Dämpfungseigenschaften der Folie ändern sich in diesem Dickenbereich nicht wesentlich, bevorzugt wird die Messung aber an Folien mit einer Dicke von 0,84 mm durchgeführt), die zwischen zwei 2 mm dicken Glasscheiben laminiert wurde. Gemessen werden dabei die ersten beiden Schwingungsmoden n, 1.mode und 2.mode. Der Verlustfaktor lässt sich dabei ebenfalls angeben als η1 und η2 der 1.mode, repektive der 2.mode.

Alle Dämpfungseigenschaften der erfindungsgemäßen Folie werden nach Herstellung eines Testlaminats imüblichen Autoklavenverfahren nach einer Lagerungszeit der Glasproben von mind. 10 Wochen bei Raumtemperatur gemessen.

Erfindungsgemäße Folien stellen einen deutlichen Vorteil gegenüber herkömmlichen Schallschutzfolien insbesondere für die Laminierung mit dünnen Gläsern, d.h. Glasscheiben wie Windschutzscheiben, mit einer Gesamtdicke von kleiner als 3.7 mm, bevorzugt kleiner als 3.5 mm und besonders bevorzugt kleiner als 3.3 mm dar. Erfindungsgemäße Folie können insbesondere zur Herstellung von Laminaten mit asymmetrischen Glasdicken verwendet werden. So kann z.B. eine Glasscheibe eine Dicke von 1,8 mm und die zweite Glasscheibe eine Dicke von 1,4 mm aufweisen. Solche asymmetrische Laminaten besitzen zusätzlich schalldämmende Eigenschaften.

Der Unterschied erfindungsgemäßer Folien zu den zurzeit erhältlichen Schallschutzfolien auf Basis weichgemachten Polyvinylacetals liegt in deren erhöhter mechanischen Steifigkeit und der damit verbundenen Penetrationsfestigkeit. Dazu werden die Folien durch geeignete Kombinationen der Teilschichten als Zwischenschichtfolien auf Basis weichgemachten Polyvinylacetals zur Verfügung gestellt.

Ein besonderes Merkmal ist, dass die Folien dabei einen niedrigen Gesamtweichmachergehalt aufweisen, was eigentlich widersprüchlich zur Anwendung als schalldämpfende Folie erscheint.

Die Schalldämmungswirkung der erfindungsgemäßen Folien sollte bei den Anwendungstemperaturen des späteren Glaslaminats am höchsten sein. Bei Automobilverglasungen liegen die Anwendungstemperaturen bei ca. 20 °C, da die Scheibe im Winter geheizt und im Sommer durch Klimaanlagen gekühlt wird. Erfindungsgemäße Folien weisen gemäß ISO 16940 bevorzugt im Temperaturbereich von 15-25°C maximale Dämpfung auf. Die Dämpfung wird dabei in Form des Verlustfaktors nach ISO16940 angegeben und stellt ein Maß dafür dar, wie gut die Folie den eintreffenden Schall dämpfen, genauer gesagt in Wärme umwandeln kann (Wärmedissipation).

Die erfindungsgemäße Zwischenschichtfolie kann eine oder mehrere erste Teilfolien aus weichmacherhaltigem Polyvinylacetal mit einem Polyvinylalkoholgehalt von 17 bis 22 Gew.% bevorzugt von 18-21 Gew.% und besonders bevorzugt von 19,5-20,5 Gew.% aufweisen. Optional besitzt weist die erste Teilfolie weichmacherhaltiges Polyvinylacetal mit einen Anteil an Polyvinylacetatgruppen von 0,1 bis 11 Mol%, bevorzugt 0,1 bis 5 Mol% und besonders bevorzugt 0,1-2 mol% auf.

Die erfindungsgemäße Zwischenschichtfolie kann eine oder mehrere zweite Teilfolien aus weichmacherhaltigem Polyvinylacetal mit einem Polyvinylalkoholgehalt von 11 bis 14 Gew.% bevorzugt 11 - 13,5 Gew.% und besonders bevorzugt von 11,5 - 13 Gew.% aufweisen. Optional besitzt weist die zweite Teilfolie weichmacherhaltiges Polyvinylacetal mit einen Anteil an Polyvinylacetatgruppen von 0,1 bis 11 Mol%, bevorzugt 1-9 Mol%, besonders bevorzugt 5-8 Mol% auf.

Üblicherweise sind schalldämmende Zwischenschichtfolien sehr weich oder enthalten mindestens eine Schicht, die gegenüber den anderen Schichten des Folienlaminats sehr weich ist. Solche Folien weisen eine niedrige Glasübergangstemperatur auf und besitzen eine geringe Steifigkeit. Demgegenüber besitzen erfindungsgemäße Folien trotz guter Schalldämmung sehr gute Penetrationseigenschaften auf.

Die Penetrationseigenschaften von Verbundsicherheitsglas können z.B. nach ECE43 (Kugelfalltest) bestimmt werden. Dabei werden erfindungsgemäße Folien auf Basis weichgemachten Polyvinylacetals der Dicke von 0,76 mm zwischen 2 mm Floatglas laminiert und eine Stahlkugel von 2,26 Kg Gewicht auf ein vorgegebenes Format von 30x30 cm fallen gelassen. Die anzugebende Fallhöhe ist die Höhe, bei der das Glas die Kugel sicher zurückhält. Je höher also die Fallhöhe, desto besser die Penetrationsfestigkeit.

Eine verbesserte Penetrationsfestigkeit kann durch den Einsatz von dickeren Folien erhalten werden. Für konventionelle weiche schalldämmende Folien ist es daher für eine ausreichende Penetrationsfestigkeit erforderlich, die Foliendicke zu erhöhen. Dies führt aber zu höherem Materialeinsatz und Kosten. Neben der Foliendicke spielt die Haftung der Folie an Glas eine große Rolle für die Penetrationsfestigkeit. Bei gleicher Foliendicke zeigen Folien mit niedriger Glashaftung üblicherweise eine bessere Penetrationsfestigkeit als Folien mit hoher Glashaftung. Die Haftung zu Glas wird üblicherweise durch den sog. Pummel-Test bestimmt.

Ein aus erfindungsgemäßen Folien der Dicke 0,76 mm und zwei Glassplatten der Dicke 2 mm gefertigtes Laminat besitzt bevorzugt eine Penetrationsfestigkeit im Kugelfall gemäß ECE43 von mindestens 5,00 m, besonders bevorzugt von mindestens 5,25 m und insbesondere von mindesten 5,5 m. Die Penetrationseigenschaften wurden mit Folien der Haftung Pummel 3 - 5 bestimmt.

Die erfindungsgemäßen Folien weisen daher im Vergleich zu bekannten Schallschutzfolien bei gleicher Gesamtdicke neben guten Schalldämmeigenschaften auch verbesserte Penetrationseigenschaften nach ECE-43 auf.

Beim Einsatz von Zwischenschichtfolien, die aus mehreren Teilfolien aus weichmacherhaltigem, aber unterschiedlichen Polyvinylacetalen bestehen, ist weiterhin zu beachten, dass sich die Folieneigenschaften über die Zeit noch ändern können.

Dies ist darin begründet, dass die Verträglichkeiten von Polyvinylacetalfolien und gegebenem Weichmacher oder Weichmachersystem von den jeweiligen Anteilen an Polyvinylacetal-, Polyvinylalkohol- und Polyvinylacetatgruppen sowie der Temperatur abhängen. Insbesondere der Anteil an polaren Polyvinylalkoholgruppen beeinflusst die Weichmacherverträglichkeit stark. Daher kommt es nach nach Laminierung in den üblichen Autoklavenprozessen d.h. Einwirken von Temperaturen von über 100°C über mindestens eine Stunde zu einer Weichmachermigration zwischen den Teilschichten.

Die Weichmachermigration kann daher zu einer Änderung von Eigenschaften über die Zeit führen, z.B. können sich die mechanischen Eigenschaften wie Steifigkeit oder Zugmodul, insbesondere aber die Eigenfrequenzen der verschiedenen Moden gemessen nach ISO16940, ändern.

Dies kann zu nachteiligen Effekten führen, etwa einer Verschlechterung der Schalldämmeigenschaften bei bestimmten Temperaturen oder Frequenzen. Erfindungsgemäße Folien zeigen daher die gewünschten Eigenschaften im Gleichgewichtszustand, der nach Lamination nach einer Lagerzeit von 10 Wochen bei Raumtemperatur erreicht ist. In der Regel ist der Gleichgewichtszustand bereits nach 6, 7, 8 oder 9 Wochen Lagerzeit bei Raumtemperatur erreicht, was durch vergleichende Messungen einfach ermittelt werden kann.

Die erfindungsgemäßen Folien setzen sich bevorzugt aus mindestens zwei Teilfolien zusammen, wobei mindestens eine erste Teilfolie (A) bevorzugt ein Polyvinyacetal mit einem Anteil an Polyvinylacetatgruppen zwischen 0,1 und 11 Mol%, bevorzugt 5 und 8 Mol% (A) und mindestens eine zweite Teilfolie (B) ein Polyvinyacetal mit einem Anteil an Polyvinylacetatgruppen von 0,1 bis 11 Mol%, bevorzugt 0,1 - 4 Mol%, besonders bevorzugt 0,1 - 2 Mol% (B) enthält.

Die Teilfolien können in der Reihenfolge A/B/A oder B/A/B kombiniert werden. Die Teilfolien können jeweils in nahezu beliebiger Dicke verwendet werden, sofern sich die Schallschutzeigenschaften nicht negativ verändern. So können alle Teilfolien die gleiche Dicke aufweisen, es sind aber auch Kombinationen von Teilfolien unterschiedlicher Dicke möglich. Bei der bevorzugten Anordnung der erfindungsgemäßen Zwischenschichtfolie als Dreifachverbund A/B/A besitzen die außen liegenden Folien A weitgehend die gleiche Dicke während die schalldämmende Folie B so dünn wie möglich sein kann, wie z.B. 100-200 µm. So kann z.B. bei einer Zwischenschichtfolie im Dreifachverbund A/B/A mit einer Gesamtdicke von 0,84 mm die innenliegende, schalldämmende Schicht B eine Dicke von 100 - 200 µm und die Aussenschichten entsprechend von 320 bis 375 µm aufweisen. Dies hat den Vorteil, dass in einem entsprechenden Glas/Glaslaminat die zum Glas gerichteten Seiten der Mehrschichtfolie gleiche Haftungseigenschaften aufweisen. Die mittlere Folie gilt im Rahmen der vorliegenden Erfindung dann als zweite Teilfolie und weist die genannten Eigenschaften auf.

Erfindungsgemäße Zwischenschichtfolien weisen bevorzugt eine Gesamtdicke von 0,5 mm bis 1,14 mm, bevorzugt 0.6 bis 1 mm und besonders bevorzugt 0,76 bis 0,9 mm auf.

Allgemein sinkt die Verträglichkeit von Weichmacher und teilacetalisiertem Polyvinylalkohol mit der Abnahme des polaren Charakters des Weichmachers. So sind Weichmacher höherer Polarität mit Polyvinylacetal besser verträglich als solche mit niedrigerer Polarität. Alternativ steigt die Verträglichkeit von Weichmachern geringer Polarität mit Zunahme des Acetalysierungsgrades, d.h. mit Abnahme der Anzahl an Hydroxygruppen und damit der Polarität des Polyvinylacetals.

Auf Grund der unterschiedlichen Anteile an PolyvinylalkoholGruppen können die Teilfolien unterschiedliche Mengen von Weichmachern aufnehmen, ohne dass es zum Ausschwitzen des Weichmachers kommt. Bevorzugt weisen die Teilfolien daher einen um mindestens 5 Gew.%, besonders bevorzugt mindestens 7,5 Gew.% und insbesondere einen um mindestens 10 Gew.% unterschiedlichen Weichmacheranteil bezogen auf die Folienformulierung auf.

Insbesondere kann die erfindungsgemäße Zwischenschichtfolie eine oder mehrere erste Teilfolien mit einem Weichmachergehalt von 20 bis 27 Gew.% und eine oder mehrere zweite Teilfolien mit einem Weichmachergehalt von 30 bis 38 Gew.% aufweisen.

Die Weichmachergehalte werden wie die Dämpfungseigenschaften nach Lamination der Folie zwischen zwei Glasscheiben in einem üblichen Autoklavenprozess und einer Lagerzeit von mindestens 10 Wochen ermittelt.

Erfindungemäße Zwischenschichtfolien können durch Zusammenlegung einzeln extrudierter Teilfolien oder bevorzugt durch Coextrusion der Teilfolien hergestellt werden. Die Teilfolien können vor der Kombination miteinander gleiche oder unterschiedliche Weichmacher in einer gleichen oder unterschiedlichen Menge enthalten. Bevorzugt ist der Einsatz von gleichen Weichmachern, wobei sich die Zusammensetzung von Weichmachermischungen in den Teilfolien durch Migration geringfügig ändern kann.

Die Teilfolien können Weichmacher oder Weichmachermischungen aus mindestens einem der folgenden, für PVB-Folie bekannten Weichmacher enthalten: Di-2-ethylhexylsebacat (DOS), Di-2-ethylhexyladipat (DOA), Dihexyladipat (DHA), Dibutylsebacat (DBS), Triethylenglykol-bis-n-heptanoat (3G7), Tetraethylenglykol-bis-n-heptanoat (4G7), Triethylenglykol-bis-2-ethylhexanoat (3GO bzw. 3G8) Tetraethylenglykol-bis-n-2-ethylhexanoat (4GO bzw. 4G8), Di-2-butoxyethyladipat (DBEA), Di-2-butoxyethoxyethyladipat (DBEEA), Di-2-butoxyethylsebacat (DBES), Di-2-ethylhexylphthalat (DOP), Di-isononylphthalat (DINP), Triethylenglykol-bis-isononanoat, Triethylenglykol-bis-2-propylhexanoat, 1,2-Cyclohexandicarbonsäurediisononylester (DINCH), Tris(2-ethylhexyl)phosphat (TOF) und Dipropylenglykolbenzoat.

Zusätzlich können die erfindungsgemäßen Teilfolien weitere, dem Fachmann bekannte Zusätze enthalten wie Restmengen an Wasser, UV-Absorber, Antioxidantien, Haftungsregulatoren, optische Aufheller, Stabilisatoren, Farbmittel, Verarbeitungshilfsmittel, organische oder anorganische Nanopartikel, pyrogene Kieselsäure und/oder oberflächenaktive Stoffe.

In einer Variante der Erfindung weisen alle Teilfolien die genannten Additive in weitgehend der gleichen Konzentration auf. In einer besonderen Variante der Erfindung weist zumindest eine der Teilfolien keine Haftungsregulatoren (Antihaftmittel) auf. Als Antihaftmittel werden im Rahmen der vorliegenden Erfindung Verbindungen verstanden, mit der die Haftung von weichmacherhaltigen Polyvinylacetalfolien an Glasoberflächen eingestellt werden kann. Verbindungen dieser Art sind dem Fachmann bekannt; in der Praxis werden hierzu häufig Alkali- oder Erdalkalimetallsalze von organischen Säuren, wie z.B. Kalium/Magnesiumacetat eingesetzt.

Es ist ebenso möglich, dass mindestens eine der Teilfolien zur Verbesserung der Steifigkeit 0,001 bis 20 Gew.% SiO₂, bevorzugt 1 bis 15 Gew.%, insbesondere 5 bis 10 Gew.%, ggf. gedopt mit Al2O3 oder ZrO₂ enthält.

Zur Herstellung von Polyvinylacetal wird Polyvinylalkohol in Wasser gelöst und mit einem Aldehyd wie Butyraldehyd unter Zusatz eines Säurekatalysators acetalysiert. Das ausgefallene Polyvinylacetals wird abgetrennt, neutral gewaschen, ggf. in einem alkalisch eingestellten wässrigen Medium suspendiert, danach erneut neutral gewaschen und getrocknet.

Der Polyvinylalkoholgehalt des Polyvinylacetals kann durch die Menge des bei der Acetalisierung eingesetzten Aldehyds eingestellt werden. Es ist auch möglich, die Acetalisierung mit anderen oder mehreren Aldehyden mit 2-10 Kohlenstoffatomen (z.B. Valeraldehyd) durchzuführen.

Die auf weichmacherhaltigem Polyvinylacetal basierenden Folien enthalten bevorzugt unvernetztes Polyvinylbutyral (PVB), das durch Acetalisierung von Polyvinylalkohol mit Butyraldehyd gewonnen wird.

Der Einsatz von vernetzten Polyvinylacetalen, insbesondere vernetztem Polyvinylbutyral (PVB) ist ebenso möglich. Geeignete vernetzte Polyvinylacetale sind z.B. in EP 1527107 B1 und WO 2004/063231 A1 (thermische Selbstvernetzung von Carboxylgruppenhaltigen Polyvinylacetalen), EP 1606325 A1 (mit Polyaldehyden vernetzte Polyvinylacetale) und WO 03/020776 A1 (mit Glyoxylsäure vernetzte Polyvinylacetale) beschrieben. Auf die Offenbarung dieser Patentanmeldungen wird vollumfänglich Bezug genommen.

Als Polyvinylalkohol können im Rahmen der vorliegenden Erfindung auch Terpolymere aus hydrolysierten Vinylacetat/Ethylen-Copolymeren eingesetzt werden. Diese Verbindungen sind in der Regel zu mehr als 92 Mol% hydrolysiert und enthalten 1 bis 10 Gew.% auf Ethylen basierende Einheiten (z.B. Typ "Exceval" der Kuraray Europe GmbH).

Als Polyvinylalkohol können im Rahmen der vorliegenden Erfindung weiterhin auch hydrolysierte Copolymere aus Vinylacetat und mindestens einem weiteren ethylenisch ungesättigten Monomer eingesetzt werden.

Die Polyvinylalkohole können im Rahmen der vorliegenden Erfindung rein oder als Mischung von Polyvinylalkoholen mit unterschiedlichem Polymerisationsgrad oder Hydrolysegrad eingesetzt werden. Es ist möglich, dass die erfindungsgemäßen Zwischenschichtfolien aus 2, 3, 4 oder 5 Teilfolien bestehen, wobei die jeweils benachbarten Teilfolien die genannten unterschiedlichen Eigenschaften aufweisen.

Zur Herstellung der erfindungsgemäßen Folien können die Teilfolien zunächst einzeln durch Extrusion hergestellt und anschließend mechanisch z.B. durch gemeinsames Aufrollen auf einen Folienwickel zur erfindungsgemäßen Zwischenschichtfolie zusammengefügt werden.

Es ist auch möglich, die Zwischenschichtfolie durch gleichzeitige Coextrusion der Teilfolien herzustellen. Die Coextrusion kann z.B. mit einer entsprechend ausgestatteten Mehrschichtdüse oder einem Feed-Block erfolgen.

Im Automobilbereich werden häufig Folien verwendet, die im oberen Bereich ein sog. Farbband aufweisen. Hierzu kann entweder der obere Teil der Folie mit einer entsprechend eingefärbten Polymerschmelze coextrudiert werden oder es kann in einem Mehrschichtsystem eine der Teilfolien eine unterschiedliche Färbung aufweisen. In der vorliegenden Erfindung ist dies durch ganz oder teilweises Einfärben zumindest einer Teilfolie realisierbar.

Die Herstellung der erfindungsgemäßen Folien bzw. Teilfolien folgt in der Regel durch Extrusion oder Coextrusion, die unter bestimmten Bedingungen (Schmelzedruck, Schmelzetemperatur und Werkzeugtemperatur) unter Erhalt einer Schmelzbruchoberfläche, d.h. einer stochastischen Oberflächenrauheit.

Alternativ kann einer bereits hergestellten erfindungsgemäßen Zwischenschichtfolie durch einen Prägevorgang zwischen mindestens einem Walzenpaar eine regelmäßige, nicht stochastische Rauhigkeit aufgeprägt werden. Geprägte Folien weisen in der Regel ein verbessertes Entlüftungsverhalten bei der Verbundglasherstellung auf und werden bevorzugt im Automobilbereich eingesetzt.

Erfindungsgemäße Folien weisen unabhängig vom Herstellverfahren eine einseitig oder besonders bevorzugt beidseitig aufgebrachte Oberflächenstruktur mit einer Rauhigkeit R_{z} von 15 bis 150 µm, bevorzugt R_{z} von 15 bis 100 µm, besonders bevorzugt R_{z} von 20 bis 80 µm und insbesondere R_{z} von 30 bis 75 µm auf.

Erfindungsgemäße Folien sind auch zur Herstellung von Glas/Folie/Kunststoff-Laminaten, wie etwa zur dauerhaften Verklebung einer Glasscheibe mit einer PET-Schicht gut geeignet. Auch das Verkleben zweier Kunststoffscheiben, etwa aus Polycarbonat oder PMMA ist mit den erfindungsgemäßen Folien durchführbar.

Die erfindungsgemäßen Folien können insbesondere zur Herstellung von Verbundsicherheitsgläsern durch Laminieren mit einer oder mehreren Glasscheiben in dem Fachmann bekannter Weise verwendet werden. Die Verbundsicherheitsgläser können im Automobilbereich, z.B. als Windschutzscheibe, als auch im Architekturbereich z.B. in Fenstern oder transparenten Fassadenbauteilen oder im Möbelbau verwendet werden.

Eine weitere Verwendung der erfindungsgemäßen Folien besteht in der Herstellung von Photovoltaikmodulen.

Die prinzipielle Herstellung und Zusammensetzung von Folien auf Basis von Polyvinylacetalen ist z. B. in EP 185 863 B1, EP 1 118 258 B1 WO 02/102591 A1, EP 1 118 258 B1 oder EP 387 148 B1 beschrieben.

### Messmethoden

Die Esterzahl EZ von Polyvinylalkohol wird gemäß DIN EN ISO 3681 bestimmt. Der Hydrolysegrad HG errechnet sich aus der Esterzahl wie folgt: HG [Mol%] = 100*(100 - 0,1535*EZ)/(100 - 0,0749*E2)

Die Bestimmung des Polyvinylalkohol- und Polyvinylacetatgehaltes von PVB erfolgt gemäß ASTM D 1396-92. Der Acetalysierungsgrad (= Butyralgehalt) kann als der zu Hundert fehlende Teil aus der gemäß ASTM D 1396-92 bestimmten Summe aus Polyvinylalkohol- und Polyvinylacetatgehalt berechnet werden. Die Umrechnung von Gew.% in Mol% erfolgt gemäß dem Fachmann bekannten Formeln.

Der Weichmachergehalt der Folien wird durch Lösen der Folie in Ethanol und anschließende quantitative Gaschromatographie ermittelt. Um den Weichmachergehalt der Teilfolien zu ermitteln müssen die Mehrschichtfolien nach einer Konditionierungszeit von 10 Wochen bei Raumtemperatur d.h. nach weitgehendem Abschluss der Weichmachermigration wieder getrennt und einzeln vermessen werden.

### Folienrauhigkeit:

Die Messung der Oberflächenrauhigkeit R_{z} oder des Rauhigkeitswerts R_{z} erfolgt nach DIN EN ISO 4287. Die angegebenen Messungen wurden mit einem Rauhigkeitsmessgerät der Fa. Mahr Typ S2, Vorschubgerät PGK mit mechanischem Einkufentaster MFW-250 durchgeführt. Die Grenzwellenlänge λ_{c}, die Gesamtmessstrecke Iₘ, die Anzahl und Länge der Einzelmessstrecken lₑ und die Vorlauf- und Nachlaufstrecke lᵥ bzw. Iₙ werden gemäß der o.g. Norm gewählt.

Die Bestimmung der Glasübergangstemperatur des teilacetalisierten Polyvinylalkohols erfolgt mittels Dynamischer Differenzkalorimetrie (DSC) gemäß DIN 53765 unter Verwendung einer Heizrate von 10K/min im Temperaturintervall - 50 °C - 150°C. Es wird eine erste Heizrampe, gefolgt von einer Kühlrampe, gefolgt von einer zweiten Heizrampe gefahren. Die Lage der Glasübergangstemperatur wird an der der zweiten Heizrampe zugehörigen Messkurve nach DIN 51007 ermittelt. Der DIN-Mittelpunkt (Tg DIN) ist definiert als Schnittpunkt einer Horizontalen auf halber Stufenhöhe mit der Messkurve. Die Stufenhöhe ist durch den vertikalen Abstand der beiden Schnittpunkte der Mitteltangente mit den Basislinien der Messkurve vor und nach Glasumwandlung definiert.

### Messung der Penetrationseigenschaften

Die Penetrationseigenschaften der Folien werden über den Kugelfalltest nach ECE43 bestimmt. Dazu werden die Folien einlagig zwischen 2 Scheiben Floatglas der Dicke 2 mm mittles dem Fachmann bekannten Methoden laminiert. Die Größe der Scheiben beträgt 30 x 30 cm. Die Proben werden nach einer Lagerungszeit von 10 Wochen bei 20°C gemäß ECE43 dem Kugelfalltest unterzogen. Dabei trifft eine 2,26 Kg schwere Stahlkugel auf die Scheiben, welche in einen Rahmen eingespannt sind. Es werden mind. 10 Scheiben der gleichen Folie getestet und die Fallhöhe angegeben, bei der die Kugel die Scheibe nicht mehr durchschlägt. Da bei den Penetrationseigenschaften auch die Haftung eine Rolle spielt, wurden alle Scheiben bei gleichem Haftungsniveau von Pummel 3 - 5 getestet.

### Messung des Dämpfungsverhaltens

Die Dämpfungseigenschaften der Folien werden durch Messung der mechanischen Impedanz gemäß ISO 16940 bestimmt. Dazu werden die Folien zwischen zwei Glasscheiben der Dicke 2 mm laminiert und hieraus ein Probenstück mit den Abmessungen 300*25 mm ausgeschnitten. Auf diese Glasprobe wird mit Hilfe eines Cyanoacrylatklebers in der Mitte eine Klebkopfschraube (Typ UA0866/Fa. Brüel&Kjaer) aufgebracht, welche es ermöglicht, die Probe über ein Gewinde direkt mit einem Impedanzmesskopf (Typ 8001/Fa. Brüel&Kjaer GmbH) zu verbinden. Dieser ermöglicht die gleichzeitige Messung von Kraft und Beschleunigung an einem Punkt der Glasprobe über einen Frequenzbereich von 1-10000 Hz. Der Impedanzmesskopf befindet sich dabei direkt auf dem Schwingtisch eines Schwingerregers (Typ 4809/Fa. Brüel&Kjaer GmbH), über welchen die gewünschten Kräfte übertragen werden. Beide befinden sich in einem regelbaren, isolierten Heizschrank (Fa. Binder), welcher die Bestimmung der Dämpfungseigenschaften über einen Temperaturbereich von bevorzugt 0-40°C ermöglicht. Nun wird mithilfe eines Rauschsignalerzeugers (PULSE Frontend Type 3560B-040/Fa. Brüel&Kjaer GmbH), welcher zugleich auch als Signalempfänger fungiert, ein Rauschen erzeugt. Das Rauschen wird über einen Leistungsverstärker (Typ2718/Fa. Brüel&Kjaer GmbH) auf den Schwingerreger geleitet. Der Frequenzbereich umfasst dabei 0 bis 5000 Hz. Die Reaktion der Glasprobe auf die erzeugten Schwingungen kann nun bei unterschiedlichen Temperaturen direkt über den Impedanzmesskopf mittels Kraft/Geschwindigkeitsaufnahme gemessen und mit einer Analysensoftware (PULSE FFT Analysis Typ7770N2/Fa. Brüel&Kjaer GmbH) ausgewertet werden. Aus der ermittelten Übertragungsfunktion aus Kraft und Geschwindigkeit lassen sich die verschiedenen Eigenfrequenzen *f* der Schwingungsmoden n der Glasproben, sowie deren Halbwertsbreiten ermitteln. Dabei wird die Halbwertsbreite Δ*f* bei 3dB unterhalb des Signalsmaximums gewählt. Über die Beziehung η = Δ*f* / *f* lässt sich der Verlustfaktor η bei den unterschiedlichen Eigenfrequenzen bestimmen. Ein hoher Verlustfaktor bzw. ein hoher prozentualer Dämpfungswert sind ein Maß für die Güte der Schalldämpfungseigenschaften.

Die Proben werden jeweils direkt, etwa 2h nach der Laminierung im Autoklaven gemessen. Anschließend werden die fertigen und gemessenen Proben bei 20°C gelagert und nach 10 Wochen erneut vermessen. Dies hat den Grund, dass sich die Eigenschaften über die Zeit verändern, bis Sie Ihren Gleichgewichtszustand erreichen. Wie oben beschrieben, wird diese zeitliche Abhängigkeit durch Weichmacherdiffusionsprozesse hervorgerufen.

Neben dem Verlustfaktor an sich spielt aber auch die Lage, d.h. die Höhe der Eigenfrequenz der verschiedenen Schwingungsmoden eine wichtige Rolle. Je höher diese Eigenfrequenzen liegen, desto steifer ist das Glaslaminat. Dies wird auch ausgedrückt durch das Biegesteifigkeitsmodul B in ISO16940. Aus der Gleichung für B ist ersichtlich, dass bei höherer Eigenfrequenz auch die Biegesteifigkeit größer ist bei der entsprechenden Schwingungsmode, da f~B bei der jeweiligen Mode. Für den bevorzugten Einsatz in dünnen Windschutzscheiben, bsp. kleiner als 3,7 mm (bezogen auf die reine Glasdicke ohne Folie) bevorzugt aber kleiner 3,5 mm und besonders bevorzugt kleiner 3,3 mm Glas, müssen die Folien den Verlust an Glasdicke und damit auch an Steifigkeit in gewissen Teilen ausgleichen, ohne dabei aber Ihre guten Schalldämmeigenschaften zu verlieren. Daher weisen erfindungsgemäße Folien eine Eigenfrequenz der 2.mode bei 20°C von größer 750 Hz und bevorzugt größer780 Hz und besonders bevorzugt größer800 Hz auf bei Verlustfaktoren von größer 0.25, bevorzugt größer 0.3 und besonders bevorzugt größer 0.35 auf

Da die Dämpfungseigenschaften eines Materials von der Temperatur abhängen, wurden die Proben in einem ausgewählten Temperaturbereich von 10-30°C (10°C-Intervall) gemessen, welcher im Prinzip den Anwendungsbereich des schallabsorbierenden Glases abdeckt.

### Beispiele

Die eingesetzten Polyvinylbutrale wurden in üblicher dem Fachmann bekannter weise hergestellt und weisen die in den Tabellen angegebene chemische Zusammensetzung und mechanische Eigenschaften auf. Die Dämpfungseigenschaften wurden nach Lamination in einem Autoklavenprozess und 10-wöchiger Lagerung der Laminate bei Raumtemperatur bestimmt. E

In den Beispielen 1-6 sind verschiedenen Variante erfindungsgemäßer Folien dargestellt. Es ist ersichtlich, dass sich durch gezielte Einstellung des Weichmachergehalts unter 28 Gew.% bei verschiedenen Kombinationen der Teilfolien eine Eigenfrequenz der 2.mode nach ISO16940 von größer als 750 Hz mit Verlustfaktoren von größer als 0.25 einstellen.

Dabei zeigen erfindungsgemäße Folien auch sehr gute Penetrationseigenschaften im Vergleich zu herkömmlichen Schallschutzfolien gleicher Dicke, wie Vergleichsbeispiel 1 zeigt.

Tabellen 3 und 4 zeigen die Effekte der Migration des Weichmachers. Die erfindungsgemäßen Folien zeigen erst nach einer Wartezeit durch die Migration des Weichmachers die gewünschten Dämpfungseigenschaften (Tabelle 4 im Vergleich zu Tabelle 3).

Das Vergleichsbeispiel 2 stellt eine gewöhnliche, nichterfindungsgemäße Folie auf Basis der Teilfolie B1 dar. Diese Folie zeigt zwar auch gute Penetrationseigenschaften, besitzt aber im Vergleich zu erfindungsgemäßen Folien keine dämpfungseigenschaften gegenüber Schall nach ISO16940 und ist deshalb auch für den Einsatz als Schallschutzfolie nicht verwendbar.

Erfindungsgemäße Folien sind daher besonders für den Einsatz mit dünnen Gläsern geeignet sind.

**Tabelle 1**

| Teilfolie A bzw. C | PVB | Tg PVB, DIN [°C] | PVAlkohol/ Gew.% | PVAcetat /Mol% | Butyral/ Gew.% | WM/ Gew.% |
|---|---|---|---|---|---|---|
| B | 1 | 74,9 | 20 | 1 | 78,7 | 27,5 |
| A1 | 2 | 65,2 | 11,9 | 7,2 | 78,9 | 30,8 |
| A2 | 2 | 65,2 | 11,9 | 7,2 | 78,9 | 24,15 |
| A3 | 2 | 65,2 | 11,9 | 7,2 | 78,9 | 17,42 |
| A4 | 2 | 65,2 | 11,9 | 7,2 | 78,9 | 25,4 |
| A5 | 2 | 65,2 | 11,9 | 7,2 | 78,9 | 25,1 |
| A6 | 2 | 65,2 | 11,9 | 7,2 | 78,9 | 25,05 |
| A7 | 2 | 65,2 | 11,9 | 7,2 | 78,9 | 37,5 |

**Tabelle 2**

| Beispiel | Schichtaufbau Teilfolien | Schichtdicke [mm] A/B/A | Weichmacher-gehalt Teilschicht B/Gew.% nach 10 Wochen |
|---|---|---|---|
| 1 | A1/B1/A1 | 0,375/0,2/0,375 | 36,5 |
| 2 | A2/B1/A2 | 0,36/0,125/0,36 | 38,1 |
| 3 | A3/B1/A3 | 0,36/0,125/0,36 | 36,2 |
| 4 | A4/B1/A4 | 0,32/0,2/0,32 | 36,1 |
| 5 | A5/B1/A5 | 0,33/0,175/0,33 | 36,6 |
| 6 | A6/B1/A6 | 0,44/0,225/0,44 | 36,1 |
| Vgl.1 | A7/B1/A7 | 0,36/0,125/0,36 | 39,1 |
| Vgl.2 | B1 | 0,76 | 27,5 |

**Tabelle 3**

| Beispiel | | Verlustfaktor der 2. Mode mit Frequenz in [Hz] bei verschiedenen Temperaturen 2 h nach Autoklav | | | | | Gesamt-WM Gew.% |
|---|---|---|---|---|---|---|---|
| | [Hz] | Verlustfaktor 10°C | [Hz] | Verlustfaktor 20°C | [Hz] | Verlustfaktor 30°C | |
| 1 | 1175 | 0,08 | 1014 | 0,25 | 752 | 0,4 | 27 |
| 2 | 1162 | 0,07 | 1021 | 0,24 | 752 | 0,4 | 27 |
| 3 | 1173 | 0,05 | 1061 | 0,18 | 816 | 0,39 | 26 |
| 4 | 1125 | 0,06 | 1004 | 0,25 | 738 | 0,43 | 27 |
| 5 | 1156 | 0,07 | 1005 | 0,24 | 742 | 0,39 | 27 |
| 6 | 1169 | 0,08 | 1013 | 0,25 | 748 | 0,41 | 27 |
| Vgl.1 | 1092 | 0,13 | 901 | 0,32 | 652 | 0,31 | 29 |
| Vgl.2 | 1158 | 0,026 | 1094 | 0,068 | 966 | 0,19 | 27,5 |

**Tabelle 4**

| Beispiel | | Verlustfaktor der 2. Mode mit Frequenz in [Hz] bei verschiedenen Temperaturen nach 10 Wochen | | | | | Gesamt-WM Gew.% |
|---|---|---|---|---|---|---|---|
| | [Hz] | Verlustfaktor 10°C | [Hz] | Verlustfaktor 20°C | [Hz] | Verlustfaktor 30°C | |
| 1 | 1086 | 0,18 | 841 | 0,38 | 634 | 0,31 | |
| 2 | 1050 | 0,2 | 801 | 0,40 | 628 | 0,29 | 27 |
| 3 | 1086 | 0,17 | 874 | 0,35 | 661 | 0,34 | 26 |
| 4 | 1050 | 0,16 | 842 | 0,37 | 624 | 0,35 | 27 |
| 5 | 1058 | 0,18 | 812 | 0,38 | 618 | 0,32 | 27 |
| 6 | 1086 | 0,17 | 826 | 0,40 | 619 | 0,33 | 27 |
| Vgl. 1 | 950 | 0,27 | 712 | 0,37 | 604 | 0,22 | 29 |
| Vgl. 2 | 1158 | 0,026 | 1094 | 0,068 | 966 | 0,19 | 27,5 |

**Tabelle 5**

| Beispiel | Verlustfaktor der 1. Mode mit Frequenz in [Hz] bei 20°C | | | | Kugelfalltest nach ECE-43 mit 2 mm Glas (Format 30x30 cm) und einer Folienlage |
|---|---|---|---|---|---|
| | [Hz] | 2 h nach Autoklav | [Hz] | Nach 10 Wochen Lagerung | Fallhohe bei 20°C |
| 1 | 195 | 0,17 | 168 | 0,34 | 6,75 |
| 2 | 191 | 0,15 | 161 | 0,32 | 5,75 |
| 3 | 196 | 0,11 | 173 | 0,27 | 6,25 |
| 4 | 193 | 0,17 | 170 | 0,25 | 5,50 |
| 5 | 191 | 0,16 | 164 | 0,32 | 5,50 |
| 6 | 196 | 0,17 | 167 | 0,35 | 7,50 |
| Vgl. 1 | 171 | 0,25 | 148 | 0,31 | 5,00 |
| Vgl.2 | 195 | 0,027 | 195 | 0,027 | 5,50 |

## Patentansprüche

1. Zwischenschichtfolie für Verbundverglasungen, aufgebaut aus mindestens einer ersten und mindestens einer zweiten Teilfolie enthaltend weichmacherhaltigen Polyvinylacetal mit jeweils unterschiedlichem Weichmachergehalt, **dadurch gekennzeichnet, dass** die Zwischenschichtfolie einen Gesamtweichmachergehalt von weniger als 28 Gew.% besitzt und ein aus der Zwischenschichtfolie und zwei Glassplatten der Dicke 2 mm gefertigtes Laminat
a) nach ISO16940 eine Eigenfrequenz der 2. Mode bei 20°C von größer 750 Hz und
b) nach ISO16940 einen Verlustfaktor der 2.mode bei einer Temperatur von 20°C von mindestens 0,25 aufweist.

2. Zwischenschichtfolie nach Anspruch 1, **dadurch gekennzeichnet**, das die erste Teilfolie weichmacherhaltiges Polyvinylacetal mit einem Polyvinylalkoholgehalt von 17 bis 22 Gew.% aufweist.

3. Zwischenschichtfolie nach Anspruch 1, **dadurch gekennzeichnet**, das die zweite Teilfolie weichmacherhaltiges Polyvinylacetal mit einem Polyvinylalkoholgehalt von 11 bis 14 Gew.% aufweist.

4. Zwischenschichtfolie nach einem der Ansprüche 1 bis 3, **dadurch gekennzeichnet**, das die erste Teilfolie weichmacherhaltiges Polyvinylacetal mit einen Anteil an Polyvinylacetatgruppen von 0,1 bis 11 Mol% aufweist.

5. Zwischenschichtfolie nach einem der Ansprüche 1 bis 4, gekennzeichnet, das die zweite Teilfolie weichmacherhaltiges Polyvinylacetal mit einen Anteil an Polyvinylacetatgruppen von 0,1 bis 11 Mol% aufweist.

6. Zwischenschichtfolie nach einem der Ansprüche 1 bis 5, **dadurch gekennzeichnet, dass** ein aus der Zwischenschichtfolie und zwei Glassplatten der Dicke 2 mm gefertigtes Laminat
a) nach ISO16940 eine Eigenfrequenz der 1. Mode bei 20°C von größer 160 Hz und
b) nach ISO16940 einen Verlustfaktor der 1. Mode bei einer Temperatur von 20°C von mindestens 0,25 aufweist..

7. Zwischenschichtfolie nach einem der Ansprüche 1 bis 6, **dadurch gekennzeichnet, dass** ein aus einer Zwischenschichtfolie mit einer Dicke von 0,76 mm und zwei Glassplatten der Dicke 2 mm gefertigtes Laminat eine Penetrationsfestigkeit im Kugelfall gemäß ECE43 von mindestens 5,0 m besitzt.

8. Zwischenschichtfolie nach einem der Ansprüche 1 bis 7, **dadurch gekennzeichnet, dass** die erste Teilfolie einen Weichmachergehalt von 20 bis 27 Gew.% und die zweite Teilfolie einen Weichmachergehalt von 30 bis 38 Gew.% aufweisen.

9. Zwischenschichtfolie nach einem der Ansprüche 1 bis 8, **dadurch gekennzeichnet, dass** die erste und zweite Teilfolie einen um maximal 5 Gew. unterschiedlichen Weichmachergehalt aufweisen.

10. Zwischenschichtfolie nach einem der Ansprüche 1 bis 9, **dadurch gekennzeichnet**, das eine zweite Teilfolie mit einer Dicke von 100 - 200 µm zwischen zwei erste Teilfolien einer Dicke vonn 320 bis 375 µm angeordnet ist.

11. Zwischenschichtfolie nach einem der Ansprüche 1 bis 10, **dadurch gekennzeichnet, dass** die Zwischenschichtfolie durch Coextrusion der Teilfolien hergestellt wird.

12. Verwendung der Zwischenschichtfolie nach einem der Ansprüche 1 bis 11 im Automobilbereich, in Windschutzscheiben, im Architekturbereich, in Fassadenbauteilen oder zur Herstellung von Photovoltaikmodulen.
